# EUROPEAN PATENT SPECIFICATION

(11) **EP 2 089 603 B1**
(45) Date of publication and mention of the grant of the patent: **07.04.2021**
(21) Application number: 07834710.1
(22) Date of filing: 22.11.2007
(51) Int. Cl.: E04C 2/12, E04C 3/14, E06B 5/16, B32B 21/04

(54) **DOOR PROVIDED WITH A FRAMEWORK MANUFACTURED FROM BUILDING ELEMENTS COMPRISING WOOD, SUCH AS A BEAM OR BOARD**
TÜR, DIE MIT EINEM RAHMEN VERSEHEN IST, DER AUS BAUELEMENTEN AUS HOLZ HERGESTELLT IST, WIE ZUM BEISPIEL EINEM BALKEN ODER EINER PLATTE
PORTE MUNIE D'UN CADRE FABRIQUÉ À PARTIR D'ÉLÉMENTS DE CONSTRUCTION COMPORTANT DU BOIS, COMME UNE POUTRE OU UNE PLANCHE

(30) Priority: 22.11.2006 NL 1032912
(43) Date of publication of application: 19.08.2009
(73) Proprietor: Berkvens Beheer B.V., 5711 CS Someren (NL)
(72) Inventor: FLEURY, Albert, 9120 Haasdonk (BE)
(74) Representative: V.O.
(86) International application number: PCT/NL2007/050582
(87) International publication number: WO 2008/063062

(56) References cited:
- EP-A2- 0 124 881
- DE-U- 7 540 660
- GB-A- 1 377 059
- US-A- 6 119 411
- US-A1- 2006 207 199
- US-A1- 2006 248 833
- US-B1- 6 745 526

## Description

The invention relates to a door provided with a framework which is at least substantially manufactured from building elements comprising wood, such as a beam or a board, and two cover plates provided on opposite sides of the framework. The invention further relates to a method for manufacturing a door.

A building element comprising wood, such as a beam or board, is known per se. Such building elements are utilized, inter alia, in inner doors. Such a door is provided with a framework which is manufactured at least substantially from these wooden building elements.

Such a framework is known per se and is provided with, for instance, two vertical uprights, an upper horizontal member and a lower horizontal member. The two vertical uprights and the two horizontal members are manufactured from the wooden building element. On both sides of the framework, cover plates are provided.

If such known inner doors are to meet specific fire safety standards, such as, for instance, the standard of a 30 or 60 minute fire resistant door, use is made of wooden building elements whose framework is manufactured at least substantially from hardwood such as merbau or meranti. It is further known to provide a fire resistant material, such as perlite or a mineral fiberboard filling, between the cover plates. As the building elements consist of hardwood, the requirements set for a 30 minute or 60 minute fire resistant door can be met. This latter means that when there is a fire on one side of the door, it takes 30 or 60 minutes, respectively, before the fire reveals itself on the other side of the door. Therefore, the respective door can withstand fire for 30 or 60 minutes, respectively.

A drawback of the known doors and, hence, of the known building elements is that hardwood becomes ever scarcer and that the use of hardwood is relatively expensive. Furthermore, hardwood is generally appreciated as a visibly attractive sort of wood, from which aspect no profit is made when it is at the inside of the door. Furthermore, there are environmental objections to the use of, in particular, tropical hardwood.

The invention contemplates providing a solution to this problem.

Accordingly, a door according to claim 1 is provided, said door being provided with a framework at least substantially manufactured from building elements composed of at least three wood layers of wood and at least two fire prevention layers of a fire prevention material, wherein each wood layer adjoins at least one of the fire prevention layers and wherein the fire prevention material is a solid material which does not burn at a temperature that is lower than 850°C and which, in free condition, expands in volume by at least a factor 2, preferably by at least a factor 3 and more preferably by at least a factor 5 as a result of the temperature rise of the fire prevention material with a fire that has reached the fire prevention material.

What is meant by not burning at a temperature lower than 850°C is not burning at any random temperature lower than 850°C. The referred-to expansion in volume can be smaller when the fire prevention material is partly included in a rigid space as is the case in this example. As a result, pressure build-up can take place in the expanded material because then, it cannot fully expand.

Surprisingly, such a building element can be utilized in, for instance, doors, in a manner such that the doors can also meet the fire resistance standards without it being necessary that the framework comprises hardwood building elements. The at least three wood layers can be manufactured from a non-hardwood. For instance, the at least three wood layers may be manufactured from pinewood, maple and/or pitch pine. These are relatively inexpensive types of wood. The wood layers can also be manufactured from not only pure wood. For instance, the wood layers can be manufactured from, for instance, MDF. Surprisingly, in use, the building element can still meet the requirements for fire resistance.

In particular, the fire prevention material is a material which, in free condition, expands by the above-mentioned factor when the temperature of this fire prevention material rises above a temperature T, wherein T is in the range of 100 - 180°C, more preferably in the range of 110 - 140°C.

For the door according to the invention provided with a framework manufactured at least substantially from building elements, it applies that the at least three wood layers and the at least two fire prevention layers of the building elements each extend in planes which are at least substantially perpendicular to the cover plates of the door. In other words, the at least three wood layers and the at least two fire prevention layers of the building elements are directed at least substantially perpendicularly to the plane of the door.

When a fire starts on one side of the door according to the invention, the wood of the building elements will start burning relatively rapidly. This will proceed relatively easily when the wood has not been manufactured from hardwood but from, for instance, pinewood. When wood burns, carbon is formed. However, as at the same time the fire prevention material will start to expand due to the increased heat, the carbon is retained and starts forming a carbon layer that protects against fire. The result is that a building element can withstand fire much longer than a building element manufactured completely from non-hardwood. Here, the at least three wood layers and at least two fire prevention layers extend, in use, at least substantially in a direction in which the advance of the fire is to be prevented.

The building element has as a property that during a fire, the at least two fire prevention layers will expand in all directions. As a result, it is possible to counter all seams in, for instance, the framework or the casing of the door according to the invention manufactured from building elements. Therefore, these seams will close during a fire. It is therefore possible to produce a framework of a door or a casing with great tolerances as to material dimensions. The same applies for window casings. The functionality of the fire resistant doors and window casings is therefore less dependent on accuracy used in production. Further, according to the invention, it is no longer necessary to afterwards provide a groove in a hardwood beam at the outside thereof and manually provide a fire resistant strip. Nor is there any longer any need to provide additional covering of a lock casing in a door. The function of cooling and insulating of such a lock casing is taken over, in the door according to the invention, by the building elements. Further, parts that are used in the door can be composed of remainders. As a result, less waste is involved. Furthermore, it applies that the deformation during normal use and in a situation of a fire is considerably less than when non-layered construction wood is used.

It further applies in particular that, with the exception of an outer wood layer, on both sides, each wood layer adjoins a fire prevention layer.

It also applies in particular that on both sides, the at least one fire prevention layer adjoins one of the wood layers, in particular that each fire prevention layer adjoins at least one of the wood layers, more particularly that on both sides, each fire prevention layer adjoins one of the wood layers.

It preferably applies that the at least one fire prevention layer and the at least two wood layers are at least substantially parallel to each other. Such building elements can be manufactured relatively simply.

It further applies in particular that each fire prevention layer is situated between two wood layers.

It applies that the building element comprises a wooden beam or board, provided with at least two spaced apart grooves while in each groove, a fire prevention layer is included. Such a building element can be manufactured in a simple manner.

It preferably applies that the fire resistant material expands in volume by a factor in the range of 2 - 10, under the influence of a fire that reaches the building element.

It also preferably applies that the fire prevention material has a specific weight greater than 1000 kg/m3.

It further applies in particular that the fire prevention material is a solid material that does not burn at a temperature that is lower than 1000 °C, and preferably does not burn at a temperature that is lower than 1200°C.

Therefore, the fire prevention material does not burn in particular at any temperature lower than 1000°C and preferably not at any temperature lower than 1200°C.

The fire prevention material is for instance a salt, and comprises for instance substantially XSi02, wherein X stands for Na, K or Ca.

It applies in particular that the fire prevention material comprises substantially silicates, such as sodium silicates, potassium silicates, sodium potassium silicates, sodium hydrogen silicates, potassium hydrogen silicates, magnesium silicates and/or calcium silicates.

It also applies in particular that the at least two wood layers each have a specific weight that is smaller than 900 kg/m3.

Presently, the invention will be further elucidated on the basis of the drawing. In the drawing:
Fig. 1 shows a first embodiment of a building element;
Fig. 2a shows a framework of a door according to the invention;
Fig. 2b shows a cross section of the framework of Fig. 2a along the line 2b;
Fig. 2c shows a cross section of the framework of Fig. 2a along the line 2c;
Fig. 2d shows a cross section of the framework of Fig. 2a along the line 2d;
Fig. 2e shows a cross section of the framework of Fig. 2a along the line 2e;
Fig. 3 shows a side view of a door according to the invention in the direction of the arrow P of Fig. 2a;
Fig. 4 shows a second embodiment of a building element;
Fig. 5a shows a second embodiment of a framework of a door according to the invention;
Fig. 5b shows a cross section of the framework of Fig. 5a along the line 5b;
Fig. 6 shows a third embodiment of a building element; and
Fig. 7 shows a framework for a door according to the invention.

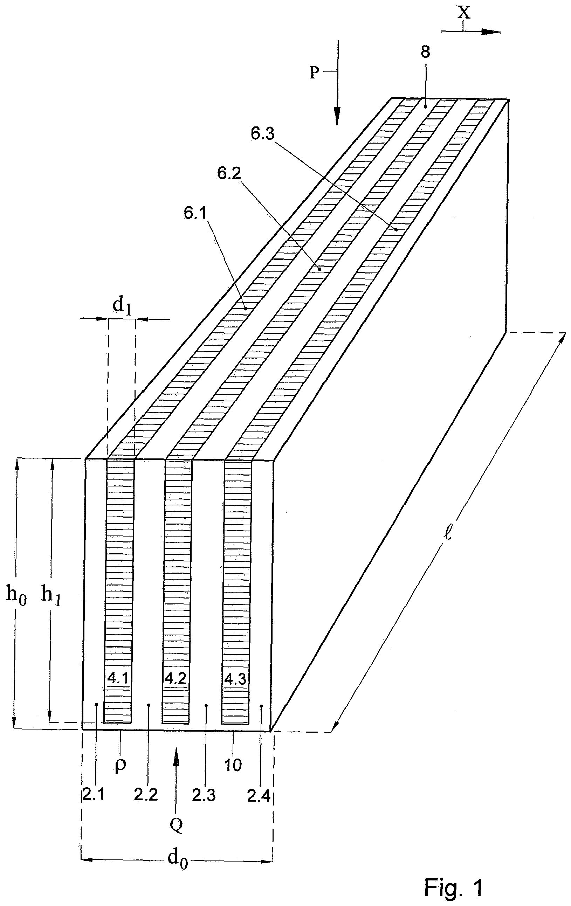

In Fig. 1, with reference numeral 1, a building element is indicated. A building element is in the form of a beam or a board and comprises wood. The building element lis composed of at least three wood layers 2.1, 2.2 and 2.3 and at least two fire prevention layers 4.1 and 4.2 which are included between the at least three wood layers 2.1, 2.2 and 2.3, respectively. In this example, it applies that the building element is provided with four wood layers 2.1, 2.2, 2.3 and 2.4 and three fire prevention layers 4.1, 4.2 and 4.3. It applies that two of the wood layers 2.1 and 2.4 form an outer layer of the building element. It further applies in this example that, with the exception of an outer wood layer, on both sides, each wood layer adjoins one of the fire prevention layers.

It further applies that the fire prevention layer 4.1 is included between the wood layers 2.1 and 2.2 and that on both sides, the fire prevention layer adjoins the wood layers. The fire prevention layer 4.2 is included between the wood layers 2.2 and 2.3 and adjoins these layers. Finally, it applies for the fire prevention layer 4.3 that it is included between the wood layers 2.3 and 2.4 and adjoins these layers.

The fire prevention layers 4.1-4.3 are manufactured from a fire prevention material. The fire prevention material is a solid material that does not burn at a temperature that is lower than 850°C and preferably a material that does not burn at a temperature that is lower than 1000°C. Itfurther applies for the fire prevention material that in free condition, it expands in volume by at least a factor 2, preferably by at least a factor 3 and more preferably by at least a factor 5 as a result of a temperature rise of the fire prevention material in case of a fire that has reached the fire prevention material. This expansion in volume can be smaller when the fire prevention material is partly included in a rigid space, as is the case in this example. As a result, pressure build-up in the expanded material can take place because then, it cannot fully expand. In case of a fire, the temperature of the material can rise to, for instance, 700°C, so that the fire prevention material starts to expand.

The volume increase is defined with respect to an initial volume at room temperature (21°C).

In this example, the building element comprises a wooden beam or board, provided with three grooves 6.1,6.2 and 6.3, wherein in each groove, a fire prevention layer 4.1, 4.2 or 4.3, respectively, is included. It applies that the grooves are at least substantially parallel to each other. It also applies for at least one groove and, in this example, for each groove that it has a depth h₁ that is greater than 50% of a dimension h₀ of the building element in the direction of the depth of the respective groove.

More particularly, it applies for at least one of the grooves, and in this example for each groove, that it has a depth h1 that is greater than 80% of a dimension h₀ of the building element in the direction of the depth of the respective groove. It also applies in this example for at least one fire prevention layer and even for each fire prevention layer that it extends over a distance h₁ within the building element that is greater than fifty percent and furthermore is greater than eighty percent of a dimension h₀ of the building element in the direction of said distance.

In this example, it further applies that each wood layer 2.1, 2.2, 2.3 and 2.4 adjoins at least one of the fire prevention layers 4.1, 4.2 and 4.3. It also applies that each fire prevention layer adjoins at least one of the wood layers. In this example, it also applies that each fire prevention layer 4.1, 4.2 and 4.3 is located between two wood layers. In this example, the fire prevention layers and the wood layers are at least substantially parallel to each other.

The building element has as an advantage that when fire approaches the building element in the direction of the arrow P or Q, the building element can offer relatively much resistance against fire. Here, the wood layers 2.1, 2.2, 2.3 and 2.4 can be formed from a non-hardwood type of wood such as pinewood, maple and/or pitch pine. In this example, the wood layers are manufactured from pinewood.

When the building element according to Fig. 1 comes into contact with fire from the direction arrow P, the wood of the wood layers will start to burn on the side 8 of the building element. As a result, carbon is formed. However, as a result of the heat of the fire, the fire prevention layers 4. 1, 4.2 and 4.3 will start to expand three-dimensionally. The result is that the fire prevention layers will also expand in the direction of the arrow X in Fig. 1. The result is that the carbon formed by the burning of the wood remains clamped in between the fire prevention layers 6.1, 6.2 and 6.3. Thus, a layer of carbon is formed that protects the parts that are not yet burned against fire. The result is that the building element will offer great resistance against fire when the fire is on the side 8 of the building element.

Also when there is a fire at the side 10 of the building element opposite side 8, it applies that the building element is highly fire-resistant. In this case too, the wood located at the side 10 will burn and carbon is formed. Once more, on the side 10, the fire prevention material of the fire prevention layers will start to expand so that the carbon formed is retained and thus forms a protecting layer against further burning of the building element.

In this example, it further applies that the fire prevention material is a solid material that does not burn at a temperature that is lower than 1000°C. This means that it does not burn at any random temperature that is lower than 1000°C. It further applies in this example, that the fire prevention material is a material which, in free condition, expands in volume by the factor mentioned when the temperature of this fire prevention material rises to above a temperature T, wherein T is in the range of 100 -180 °C, more preferably in the range of 110 - 140°C.

More in particular it applies in this example that the fire prevention material is a material which, in free condition, expands by the factor mentioned when the temperature of the fire prevention material rises to above a temperature of approximately 120°C.

**I**t also applies in this example that the fire prevention material has a specific weight that is greater than 1000 kg/m3. **I**t also applies in this example that the fire prevention material has a specific weight that is greater than 1200 kg/m3. In this example, it applies that the fire prevention material comprises substantially silicates, such as sodium silicates, potassium silicates, sodium potassium silicates, sodium hydrogen silicates, potassium hydrogen silicates, magnesium silicates and/or calcium silicates. However, other materials are conceivable too. It is possible that, for instance, more in general, the fire prevention material is a salt which, upon heating, forms a glass-like substance. It may also apply that the fire prevention material comprises a water glass. In this example, it applies that the fire prevention material is at least provided with a sodium silicate, for instance sodium orthosilicate, sodium metasilicate, sodium polysilicate and/or sodium pyrosilicate. For this material, it applies that it does not burn at a temperature, i.e. any temperature, that is lower than 1000°C and that it expands by at least a factor 5 with respect to the initial volume at room temperature under influence of a fire that reaches the building element.

In this example, it further applies that the at least two wood layers each have a density that is smaller than 900 kg/m3. More particularly, it applies in this example that the fire prevention material has a specific weight that is smaller than 650 kg/m3.

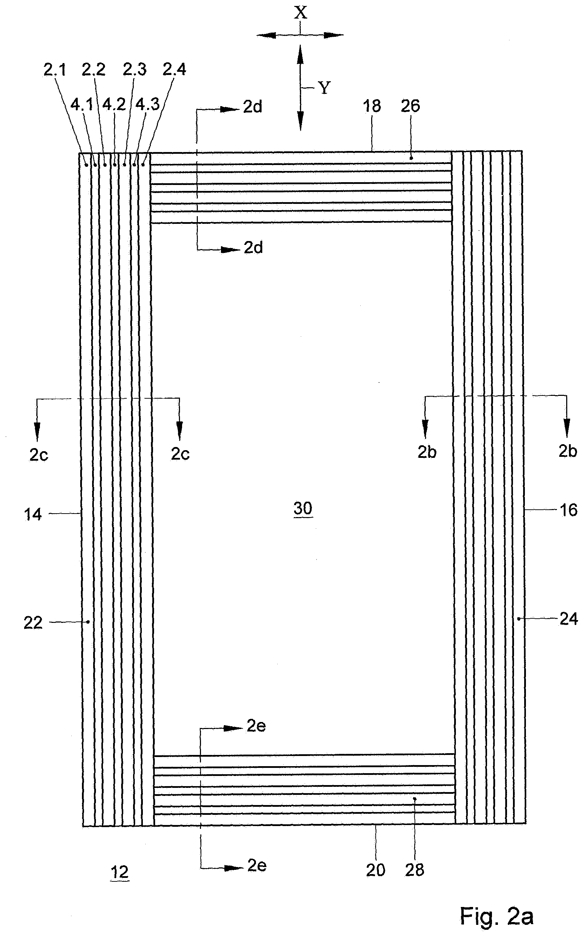

In Fig. 2a, a door with the building element according to Fig. 1 is shown, wherein the wood layers 2.1, 2.2, 2.3 and 2.4 and the fire prevention layers 4.1, 4.2 and 4.3 each extend at least substantially in planes that are perpendicular to a plane of the door. In this example, the plane of the door is the plane of the drawing.

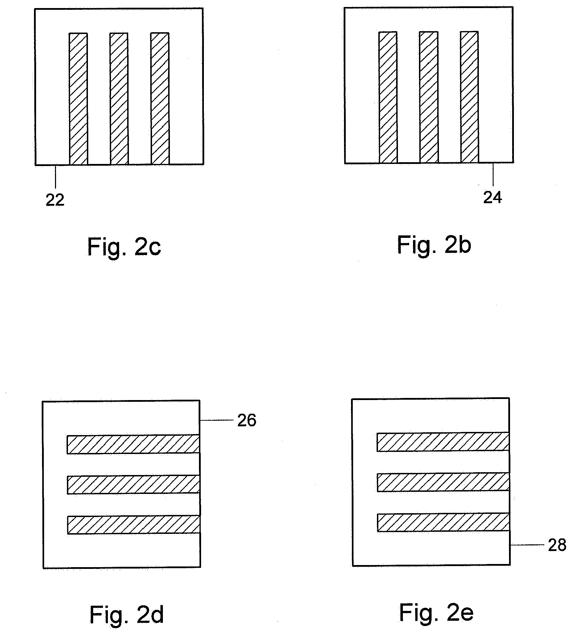

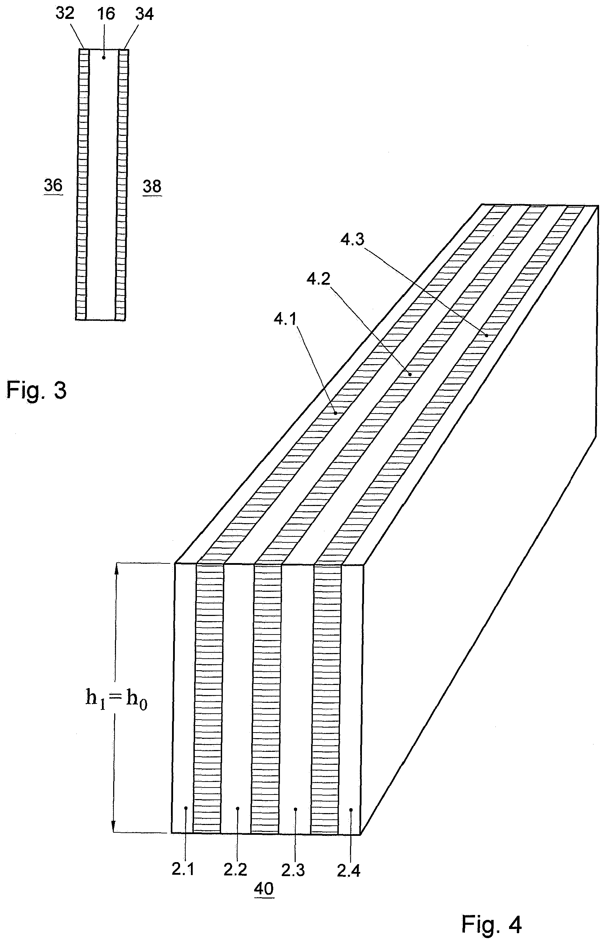

In this example, the framework 12 of the door is provided with two vertical uprights 14, 16, an upper member 18 and a lower member 20. For both the upright 14 and the upright 16 it applies that it is manufactured from a building element as shown in Fig. 1. For the upper member 18 too it applies that it is manufactured from a building element according to Fig. 1. The lower member 20 is also manufactured from a building element according to Fig. 1. For the upright 14, also, with reference numerals, the wood layers 2.1, - 2.4 and the fire prevention layers 4.1 -4.3 of the building element are indicated. The side of the building element 14 that is in sight is indicated with reference numeral 22. A cross-section of the building element 14 is shown in Fig. 2c where, also, the side 22 is indicated. The side of the building element 16 that is in sight is indicated with reference numeral 24, the side of the building element 18 that is in sight is indicated with reference numeral 26 and the side of the building element 20 that is in sight is indicated with reference numeral 28. These sides are also indicated in the Figs. 2b, 2d and 2e. Within the space enclosed by the framework, a further fire resistant material is included in the form of perlite 30. Instead thereof, also a mineral fiberboard filling 30 could have been included. For manufacturing a door, further, two cover plates 32, 34 are provided, on both sides of the framework. All this is shown in Fig. 3, viewed from a direction of the arrow P of Fig. 2a. Thus, a door is obtained which, in this example, is resistant to fire for at least a 60 minutes. When, for instance, a fire breaks out on a side 36 of the door (see Fig. 3), the door can withstand the fire for at least 60 minutes. This means that it takes at least 60 minutes before the fire has penetrated to the side 38 of the door (see Fig. 3). In case of a fire on the side 36 of the door, the cover plate 32, which is manufactured from, for instance, MDF, plywood, hardboard and the like, will start to burn relatively rapidly. The result is that also, the wood layers 2.1, 2.2, 2.3 and 2.4 of the vertical uprights 14, 16 and the members 18, 20 located on the side 36 of the door, will rapidly start to burn. These wood layers will burn while forming carbon. However, at the same time, the fire prevention layers 4.1, 4.2 and 4.3 of the uprights 14, 16 and of the members 18, 20 will start to expand as a result of the heat. Also, the fire prevention layers will not burn. The result is that the carbon formed will be retained and will thus form a carbon layer that offers resistance to fire and protects the parts of the building elements 14, 16, 18 and 20 that are not burnt yet against the relatively rapid further burning. The result is that the building element 14, 16, 18 and 20 will withstand the fire for at least 60 minutes as indicated hereinabove.

In case of fire, it further applies that the entire framework of Fig. 2a will start to expand three-dimensionally. This means that during a fire, the framework will also start to expand in the direction of the arrow X (see Fig. 2a) so that the door will clamp itself in a casing which is important for the fire prevention. Also, the door will expand in the direction of the arrow Y (see

Fig. 2a) so that the door will also clamp between a threshold and an upper beam of a casing in which the door is present. This is also beneficial to the fire prevention.

The invention is not limited in any manner to the embodiment outlined hereinabove. For instance, the cover plates of the door can also be manufactured from other materials, such as plasterboard. The door can further also be provided in a known manner with a glass opening. In the glass opening, for instance pyrodur glass can be included.

In the examples it applies that the door involved is an inside door.

In Fig. 4, a possible second embodiment of a building element is indicated with reference numeral 40. In this example, it applies that, once more, the building element is provided with four wood layers 2.1, 2.2, 2.3 and 2.4 and three fire prevention layers 4.1, 4.2 and 4.3. Here, a difference to the embodiment according to Fig. **1** is that the height h₀ of the building element and hence the height h₀ of the wood layers 2.1- 2.4 is equal to the height h₁ of the fire prevention layers 4.1-4.3.

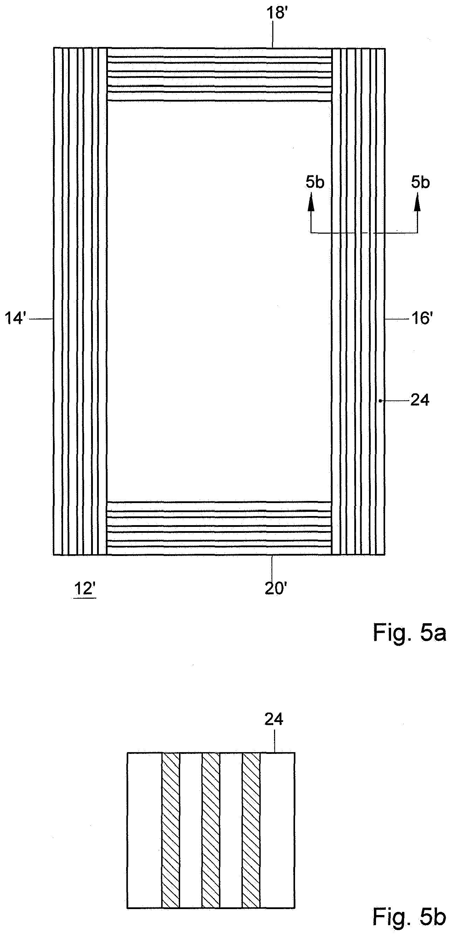

Fig. 5a shows a framework 12' of an inside door according to the invention which is provided in this example with two vertical uprights 14', 16', which are each manufactured from a building element according to Fig. 4, and an upper member 18' and a lower member 20' which are each manufactured from a building element according to Fig. 4. Once more, it applies that the wood layers and the fire prevention layers each extend in planes that are perpendicular to the plane of the door, i.e. perpendicular to the cover plates of the door.

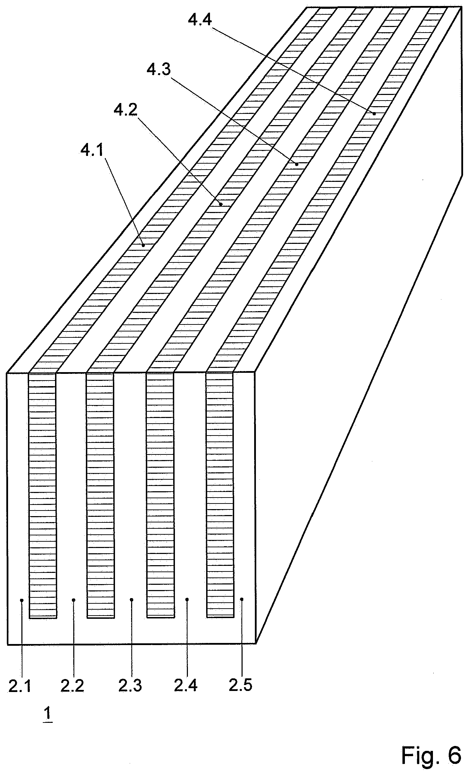

When, in Fig. 1 or in Fig. 4, the fire prevention layers 4.2 and 4.3 and the wood layers 2.3 and 2.4 are omitted, a building element remains that is provided with one fire prevention layer 4.1 having on both sides a wood layer, 2. land 2.2. These are however embodiments of a building element not forming part of the present invention. With the building element according to Fig. 1, the wood layers 2.3 and 2.4 and the fire prevention layer 4.3 can also be omitted so that a building element not forming part of the present invention is the result. The door according to the invention is provided with a framework which is at least substantially manufactured from building elements being provided with at least three wood layers and at least two fire prevention layers. Another variant is shown in Fig. 6, where the building element 1 is provided with five wood layers 2.1 - 2.5 and four fire prevention layers 4.1-4.4. For each of the building elements according to Fig. 1, 4 and 6 it furthermore applies that for instance an outer wood layer 2.1 can be omitted.

A building element can for instance be manufactured by providing grooves in a beam or board of the wood mentioned, wherein, in the respective grooves, the fire prevention material can be provided. Thus, the building elements according to the Figures land 6 can be obtained. It may be so that the fire prevention material is introduced into the grooves in liquid form whereupon the fire prevention material will harden. It is, however, also possible that the fire prevention material is introduced into the respective grooves in the form of a strip. Each groove can then be provided with one or more strips. Here, the strips can be provided in the respective grooves by clamping or with glue.

For manufacturing a building element according to Fig. 4, four separate wood layers 2.1- 2.4 and three separate fire prevention layers 4.1 - 4.3 can be the starting point, which are attached to each other by means of gluing. Here, use is made of a suitable glue such as PVAC glue. The wood layers may have been manufactured from MDF or pure wood.

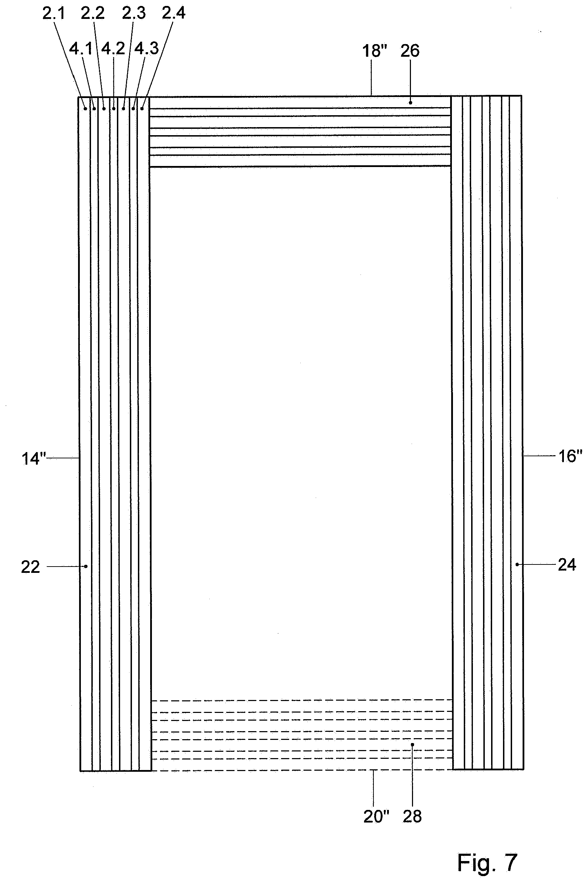

In addition to a framework of a door, with the aid of the building elements, for instance also a casing for at least one window and/or at least one door can be manufactured. Such a casing is for instance shown in Fig. 7. The casing is provided with two vertical uprights 14" and 16", and a horizontal member 18". The wood layers and the fire prevention layers of the building elements 14", 16" and 18" are each at least substantially in planes that are perpendicular to a plane of the casing. This plane of the casing is, once more, located in the plane of the drawing. Such a casing is fire resistant for the same reason as discussed with reference to the framework of Fig. 2a. Here, once more, fire resistance in a direction perpendicular to the plane of the drawing as discussed with reference to Fig. 2a is involved.

In addition to a casing of a door, also a casing of a window can be formed. Such a casing for a window may further be provided with a lower member 20" as represented in dotted lines in Fig. 7. With a casing for a door, this lower member can be omitted.

It is also possible to use other types of wood, among which, if desired, hardwood. Wood layers of wood are also understood to include layers that are manufactured not only from pure wood, such as plates of MDF. It is also possible to use other fire prevention materials than discussed, which have the properties mentioned. Such variants are each understood to fall within the framework of the invention as defined by the appended claims.

## Claims

1. A door provided with a framework which is at least substantially manufactured from building elements and two cover plates (32,34) which are provided on either side of the framework (12), the building elements (1) comprising wood, such as a beam or board, wherein the building elements are composed of at least two wood layers of wood (2.1-2.3) and at least one fire prevention layer (4.1-4.4) of a fire prevention material, wherein the at least one fire prevention layer is included between the at least two wood layers and wherein the fire prevention material is a solid material which does not burn at a temperature that is lower than 850 °C and which, in free condition, expands in volume by at least a factor 2, preferably by at least a factor 3 and more preferably by at least a factor 5 as a result of a temperature rise of the fire prevention material with a fire that has reached the fire prevention material, **characterized in that** the building elements are provided with at least three wood layers (2.1-2.5) and at least two fire prevention layers (4.1-4.4), wherein each wood layer (2.1-2.5) adjoins at least one of the fire prevention layers (4-1-4.4), while the at least three wood layers (2.1-2.5) and the at least two fire prevention layers (4.1-4.4) each extend in planes (X,Y) which are at least substantially perpendicular to the cover plates of the door.

2. A door according to claim 1, **characterized in that** two of the wood layers (2.1-2.5) form an outer layer of the building elements.

3. A door according to any one of the preceding claims, **characterized in that**, with the exception of an outer wood layer, on both sides, each wood layer adjoins a fire prevention layer (4.1-4.4).

4. A door according to any one of the preceding claims, **characterized in that** on both sides, each of the at least two fire prevention layers (4.1-4.3) adjoins one of the wood layers (2.1-2.5), in particular that each fire prevention layers adjoins at least one of the wood layers, more particularly that on both sides, each fire prevention layer adjoins one of the wood layers.

5. A door according to any one of the preceding claims, **characterized in that** the at least two fire prevention layers (4.1-4.4) and the at least three wood layers (2.1-2.5) are at least substantially parallel to each other.

6. A door according to any one of the preceding claims, **characterized in that** the wood layers and the fire prevention layers (4.1-4.4) are at least substantially parallel to each other.

7. A door according to any one of the preceding claims, **characterized in that** each fire prevention layer (4.1-4.4) is between two wood layers (2.1-2.5).

8. A door according to any of the preceding claims, **characterized in that** the building elements comprise a wooden beam or board, wherein the wooden beam or board is provided with at least two spaced apart grooves (6.1-6.3) while in each groove, a fire prevention layer (4.1-4.4) is included.

9. A door according to claim 8, **characterized in that** the grooves (6.1-6.3) are at least substantially parallel to each other.

10. A door according to claim 8 or 9, **characterized in that** for at least one of the grooves (6.1-6.3) it applies that it has a depth (h₁) that is greater than fifty percent of a diameter of the building element according to a cross section through the respective groove.

11. A door according to claim 10, **characterized in that** for at least one of the grooves it applies that it has a depth (d₁) that is greater than eighty percent of a diameter (h₀) of the building element according to a cross section through the respective groove.

12. A door according to claim 10 or 11, **characterized in that** for each groove it applies that it has a depth (h₁) that is greater than fifty percent and is preferably greater than eighty percent of a diameter (h₀) of the building element in the direction of the depth of the respective groove.

13. A door according to any one of the preceding claims, **characterized in that** the fire prevention material is a solid material that does not burn at a temperature that is lower than 1000 °C and preferably does not burn at a temperature that is lower than 1200 °C.

14. A door according to any one of the preceding claims, **characterized in that** the fire prevention material expands in volume by a factor in the range of 2 - 10 under the influence of a fire that reaches the building element.

15. A door according to any one of the preceding claims, **characterized in that** the fire prevention material is a material which, in free condition, expands in volume by said factor when the temperature of this fire prevention material rises to above a temperature T, wherein T is in the range of 100 - 180°C, more preferably in the range of 110 - 140°C.

16. A door according to claim 15, **characterized in that** the fire prevention material is a material which, in free condition, expands by said factor when the temperature of the fire prevention material rises to above a temperature of approximately 120°C.

17. A door according to any one of the preceding claims, **characterized in that** the fire prevention material has a specific weight that is greater than 1000 kg/m3.

18. A door according to claim 17, **characterized in that** the fire prevention material has a specific weight that is greater than 1200 kg/m3 and preferably greater than 1300 kg/m3.

19. A door according to any one of the preceding claims, **characterized in that** the fire prevention material is a salt which, upon heating, forms a glass-like substance.

20. A door according to any one of the preceding claims, **characterized in that** the fire prevention material comprises substantially silicates, such as sodium silicates, potassium silicates, sodium potassium silicates, sodium hydrogen silicates, potassium hydrogen silicates, magnesium silicates and/or calcium silicates.

21. A door according to any one of the preceding claims, **characterized in that** the fire prevention material comprises a water glass.

22. A door according to any one of the preceding claims, **characterized in that** the fire prevention material is at least provided with a sodium silicate, for instance sodium orthositicate, sodium metasilicate, sodium polysilicate and/or sodium pyrosilicate.

23. A door according to any one of the preceding claims, **characterized in that** the at least three wood layers (2.1-2.5) are manufactured from a non-hardwood

24. A door according to any one of the preceding claims, **characterized in that** the at least three wood layers (2.1-2.5) each have a specific weight that is smaller than 900 kg/m3.

25. A door according to claim 24, **characterized in that** the at least three wood layers (2.1-2.5) each have a specific weight that is smaller than 650 kg/m3.

26. A door according to any one of the preceding claims, **characterized in that** the at least three wood layers (2.1-2.5) are manufactured from pinewood, maple and/or pitch pine.

27. A door according to any one of the preceding claims, **characterized in that** for at least one fire prevention layer (4.1-4.4) and more specifically for each fire prevention layer (4.1-4.4) it applies that this extends over a distance within the building element that is greater than fifty percent and is preferably greater than eighty percent of a dimension of the building element in the direction of said distance.

28. A door according to any preceding claim, **characterized in that** the framework is provided with two vertical uprights (14-16), an upper horizontal member (18) and a lower horizontal member (20).

29. A door according to any preceding claim , **characterized in that** between the cover plates (32,34), perlite and/or a mineral fiberboard filling (38) is included.

30. A door according to any preceding claim, **characterized in that** the at least one upright (14,16) of the door is provided, on a side located at an outside of the door, with a strip manufactured from a foaming material.

31. A door according to any preceding claim, **characterized in that** the cover plates (32-34) are manufactured from MDF, plywood, hardboard, plasterboard and/or comparable materials.

32. A door according to any preceding claim, **characterized in that** the door is further provided with a glass opening.

33. A door according to any preceding claim, **characterized in that** in the glass opening, pyrodur glass is included.

34. A door according to any preceding claim, **characterized in that** the door involves an inside door.

35. A method for manufacturing a door according to any one of claims 1-34, **characterized in that** in a beam or board of said wood, the at least one groove (6.1-6.3) is provided whereupon in the at least one groove, the fire prevention material is provided.

36. A method according to claim 35, **characterized in that** the fire prevention material is introduced in liquid form in the at least one groove (6.1-6.3) whereupon the fire prevention material will harden.

37. A method according to claim 35, **characterized in that** the fire prevention material is introduced into the at least one groove (6.1-6.3) in the form of a strip.

38. A method according to claim 37, **characterized in that** the strip is attached by clamping or with glue in the at least one groove to the beam or board.

39. A method for manufacturing a door according to any one of the preceding claims 1-34, **characterized in that** on both sides of each of a the at least two fire prevention layers (4.1-4.4) a wood layer (2.1-2.5) is attached.

40. A method according to claim 39, **characterized in that** the at least three wood layers (2.1-2.5) and the at least two fire prevention layers (4.1-4.4) are attached to each other through gluing.

## Patentansprüche

1. Tür mit einem Rahmen, der im Wesentlichen wenigstens aus Bauelementen hergestellt wird, und zwei Abdeckplatten (32, 34), die auf beiden Seiten des Rahmens (12) vorgesehen sind, wobei die Bauelemente (1) Holz, wie einen Balken oder ein Brett, umfassen, wobei die Bauelemente aus wenigstens zwei Holzschichten aus Holz (2.1-2.3) und wenigstens einer Brandschutzschicht (4.1-4.4) aus einem Brandschutzmaterial bestehen, wobei die wenigstens eine Brandschutzschicht zwischen den wenigstens zwei Holzschichten eingeschlossen ist und wobei das Brandschutzmaterial ein festes Material ist, das bei einer Temperatur, die niedriger als 850 °C ist, nicht brennt und das sich im freien Zustand infolge eines Temperaturanstiegs des Brandschutzmaterials mit einem Feuer, das das Brandschutzmaterial erreicht hat, um wenigstens einen Faktor 2, vorzugsweise um wenigstens einen Faktor 3 und noch bevorzugter um wenigstens einen Faktor 5 im Volumen ausdehnt, **dadurch gekennzeichnet, dass** die Bauelemente mit wenigstens drei Holzschichten (2.1-2.5) und wenigstens zwei Brandschutzschichten (4.1-4.4) versehen sind, wobei jede Holzschicht (2.1-2.5) an wenigstens eine der Brandschutzschichten (4-1-4.4) angrenzt, die Holzschichten (2.1-2.5) und die wenigstens zwei Brandschutzschichten (4.1-4.4) sich jeweils in Ebenen (X,Y) erstrecken, die wenigstens im Wesentlichen senkrecht zu den Deckplatten der Tür stehen.

2. Tür nach Anspruch 1, **dadurch gekennzeichnet, dass** zwei der Holzschichten (2.1-2.5) eine Außenschicht der Bauelemente bilden.

3. Tür nach einem der vorhergehenden Ansprüche, **dadurch gekennzeichnet, dass** mit Ausnahme einer äußeren Holzschicht auf beiden Seiten jede Holzschicht an eine Brandschutzschicht (4.1-4.4) angrenzt.

4. Tür nach einem der vorhergehenden Ansprüche, **dadurch gekennzeichnet, dass** auf beiden Seiten jede der wenigstens zwei Brandschutzschichten (4.1-4.3) an eine der Holzschichten (2.1-2.5) angrenzt, insbesondere dass jede Brandschutzschicht an wenigstens eine der Holzschichten angrenzt, insbesondere dass auf beiden Seiten jede Brandschutzschicht an eine der Holzschichten angrenzt.

5. Tür nach einem der vorhergehenden Ansprüche, **dadurch gekennzeichnet, dass** die wenigstens zwei Brandschutzschichten (4.1-4.4) und die wenigstens drei Holzschichten (2.1-2.5) wenigstens im Wesentlichen parallel zueinander sind.

6. Tür nach einem der vorhergehenden Ansprüche, **dadurch gekennzeichnet, dass** die Holzschichten und die Brandschutzschichten (4.1-4.4) wenigstens im Wesentlichen parallel zueinander sind.

7. Tür nach einem der vorhergehenden Ansprüche, **dadurch gekennzeichnet, dass** jede Brandschutzschicht (4.1-4.4) zwischen zwei Holzschichten (2.1-2.5) liegt.

8. Tür nach einem der vorhergehenden Ansprüche, **dadurch gekennzeichnet, dass** die Bauelemente einen Holzbalken oder ein Brett umfassen, wobei der Holzbalken oder das Brett mit wenigstens zwei voneinander beabstandeten Nuten (6.1-6.3) versehen ist, während in jeder Nut eine Brandschutzschicht (4.1-4.4) eingeschlossen ist.

9. Tür nach Anspruch 8, **dadurch gekennzeichnet, dass** die Nuten (6.1-6.3) wenigstens im Wesentlichen parallel zueinander sind.

10. Tür nach Anspruch 8 oder 9, **dadurch gekennzeichnet, dass** für wenigstens eine der Nuten (6.1-6.3) gilt, dass sie eine Tiefe (h₁) aufweist, die größer als fünfzig Prozent eines Durchmessers des Bauelements nach einem Querschnitt durch die jeweilige Nut ist.

11. Tür nach Anspruch 10, **dadurch gekennzeichnet, dass** für wenigstens eine der Nuten gilt, dass sie eine Tiefe (d₁) aufweist, die größer als achtzig Prozent eines Durchmessers (h₀) des Bauelements nach einem Querschnitt durch die jeweilige Nut ist.

12. Tür nach Anspruch 10 oder 11, **dadurch gekennzeichnet, dass** für jede Nut gilt, dass sie eine Tiefe (h₁) aufweist, die größer als fünfzig Prozent und vorzugsweise größer als achtzig Prozent eines Durchmessers (h₀) des Bauelements in Richtung der Tiefe der jeweiligen Nut ist.

13. Tür nach einem der vorhergehenden Ansprüche, **dadurch gekennzeichnet, dass** das Brandschutzmaterial ein festes Material ist, das bei einer Temperatur niedriger als 1000 °C nicht brennt und vorzugsweise bei einer Temperatur niedriger als 1200 °C nicht brennt.

14. Tür nach einem der vorhergehenden Ansprüche, **dadurch gekennzeichnet, dass** sich das Brandschutzmaterial unter dem Einfluss eines Feuers, das das Bauelement erreicht, im Volumen um einen Faktor im Bereich von 2 - 10 ausdehnt.

15. Tür nach einem der vorhergehenden Ansprüche, **dadurch gekennzeichnet, dass** das Brandschutzmaterial ein Material ist, das sich im freien Zustand im Volumen um den Faktor ausdehnt, wenn die Temperatur dieses Brandschutzmaterials auf mehr als eine Temperatur T ansteigt, wobei T im Bereich von 100 - 180 °C, bevorzugter im Bereich von 110 - 140 °C liegt.

16. Tür nach Anspruch 15, **dadurch gekennzeichnet, dass** das Brandschutzmaterial ein Material ist, das sich im freien Zustand um den Faktor ausdehnt, wenn die Temperatur des Brandschutzmaterials auf eine Temperatur von mehr als etwa 120 °C ansteigt.

17. Tür nach einem der vorhergehenden Ansprüche, **dadurch gekennzeichnet, dass** das Brandschutzmaterial ein spezifisches Gewicht aufweist, das größer als 1000 kg/m3 ist.

18. Tür nach Anspruch 17, **dadurch gekennzeichnet, dass** das Brandschutzmaterial ein spezifisches Gewicht aufweist, das größer als 1200 kg/m3 und vorzugsweise größer als 1300 kg/m3 ist.

19. Tür nach einem der vorhergehenden Ansprüche, **dadurch gekennzeichnet, dass** das Brandschutzmaterial ein Salz ist, das bei Erwärmung eine glasartige Substanz 20 bildet.

20. Tür nach einem der vorhergehenden Ansprüche, **dadurch gekennzeichnet, dass** das Brandschutzmaterial im Wesentlichen Silikate, wie Natriumsilikate, Kaliumsilikate, Natriumkaliumsilikate, Natriumhydrogensilikate, Kaliumhydrogensilikate, Magnesiumsilikate und/oder Calciumsilikate umfasst.

21. Tür nach einem der vorhergehenden Ansprüche, **dadurch gekennzeichnet, dass** das Brandschutzmaterial ein Wasserglas umfasst.

22. Tür nach einem der vorhergehenden Ansprüche, **dadurch gekennzeichnet, dass** das Brandschutzmaterial wenigstens mit einem Natriumsilikat, z. B. Natriumorthositikat, Natriummetasilikat, Natriumpolysilikat und/oder Natriumpyrosilikat, versehen ist.

23. Tür nach einem der vorhergehenden Ansprüche, **dadurch gekennzeichnet, dass** die wenigstens drei Holzschichten (2.1-2.5) aus einem Nicht-Hartholz hergestellt sind.

24. Tür nach einem der vorhergehenden Ansprüche, **dadurch gekennzeichnet, dass** die wenigstens drei Holzschichten (2.1-2.5) jeweils ein spezifisches Gewicht aufweisen, das kleiner als 900 kg/m3 ist.

25. Tür nach Anspruch 24, **dadurch gekennzeichnet, dass** die wenigstens drei Holzschichten (2.1-2.5) jeweils ein spezifisches Gewicht aufweisen, das kleiner als 650 kg/m3 ist.

26. Tür nach einem der vorhergehenden Ansprüche, **dadurch gekennzeichnet, dass** die wenigstens drei Holzschichten (2.1-2.5) aus Kiefernholz, Ahorn und/oder Pechkiefer hergestellt sind.

27. Tür nach einem der vorhergehenden Ansprüche, **dadurch gekennzeichnet, dass** für wenigstens eine Brandschutzschicht (4.1-4.4) und insbesondere für jede Brandschutzschicht (4.1-4.4) gilt, dass sich diese über eine Strecke innerhalb des Bauelements erstreckt, die größer als fünfzig Prozent und vorzugsweise größer als achtzig Prozent einer Abmessung des Bauelements in Richtung dieser Strecke ist.

28. Tür nach einem der vorhergehenden Ansprüche, **dadurch gekennzeichnet, dass** der Rahmen mit zwei vertikalen Ständern (14-16), einem oberen horizontalen Element (18) und einem unteren horizontalen Element (20) versehen ist.

29. Tür nach einem der vorhergehenden Ansprüche, **dadurch gekennzeichnet, dass** zwischen den Abdeckplatten (32, 34) Perlit und/oder eine Mineralfaserplattenfüllung (38) eingeschlossen ist.

30. Tür nach einem der vorhergehenden Ansprüche, **dadurch gekennzeichnet, dass** der wenigstens eine Ständer (14,16) der Tür auf einer Seite, die sich an einer Außenseite der Tür befindet, mit einem aus einem Schaumstoff hergestellten Streifen versehen ist.

31. Tür nach einem der vorhergehenden Ansprüche, **dadurch gekennzeichnet, dass** die Abdeckplatten (32-34) aus MDF, Sperrholz, Hartfaserplatten, Gipsplatten und/oder vergleichbaren Materialien hergestellt sind.

32. Tür nach einem der vorhergehenden Ansprüche, **dadurch gekennzeichnet, dass** die Tür ferner mit einer Glasöffnung versehen ist.

33. Tür nach einem der vorhergehenden Ansprüche, **dadurch gekennzeichnet, dass** in der Glasöffnung Pyrodurglas eingeschlossen ist.

34. Tür nach einem der vorhergehenden Ansprüche, **dadurch gekennzeichnet, dass** die Tür
eine Innentür beinhaltet.

35. Verfahren zur Herstellung einer Tür nach einem der Ansprüche 1 bis 34, **dadurch gekennzeichnet, dass** in einem Balken oder Brett aus dem Holz die wenigstens eine Nut (6.1-6.3) vorgesehen ist, worauf in der wenigstens einen Nut das Brandschutzmaterial vorgesehen wird.

36. Verfahren nach Anspruch 35, **dadurch gekennzeichnet, dass** das Brandschutzmaterial in flüssiger Form in die wenigstens eine Nut (6.1-6.3) eingebracht wird, worauf das Brandschutzmaterial aushärtet.

37. Verfahren nach Anspruch 35, **dadurch gekennzeichnet, dass** das Brandschutzmaterial in Form eines Streifens in die wenigstens eine Nut (6.1-6.3) eingebracht wird.

38. Verfahren nach Anspruch 37, **dadurch gekennzeichnet, dass** der Streifen durch Klemmen oder mit Klebstoff in der wenigstens einen Nut am Balken oder Brett befestigt wird.

39. Verfahren zur Herstellung einer Tür nach einem der vorhergehenden Ansprüche 1 bis 34, **dadurch gekennzeichnet, dass** auf beiden Seiten der wenigstens zwei Brandschutzschichten (4.1-4.4) jeweils eine Holzschicht (2.1-2.5) befestigt wird.

40. Verfahren nach Anspruch 39, **dadurch gekennzeichnet, dass** die wenigstens drei Holzschichten (2.1-2.5) und wenigstens zwei Brandschutzschichten (4.1-4.4) durch Kleben aneinander befestigt werden.

## Revendications

1. Porte munie d'un cadre qui est au moins substantiellement fabriqué à partir d'éléments de construction et de deux plaques de couverture (32, 34) qui sont fournies sur chaque côté du cadre (12), les éléments de construction (1) comprenant du bois, tels qu'une poutre ou un panneau, dans laquelle les éléments de construction sont constitués d'au moins deux couches de bois en bois (2.1-2.3) et d'au moins une couche de prévention incendie (4.1-4.4) d'un matériau de prévention incendie, dans laquelle là au moins une couche de prévention incendie est incluse entre les au moins deux couches de bois et dans laquelle le matériau de prévention incendie est un matériau solide qui ne brûle pas à une température qui est inférieure à 850°C et qui, dans un état libre, se dilate en volume d'au moins un facteur 2, de préférence d'au moins un facteur 3 et encore mieux d'au moins un facteur 5 comme un résultat d'une élévation de température du matériau de prévention incendie avec un feu qui a atteint le matériau de prévention incendie, **caractérisée en ce que** les éléments de construction sont munis d'au moins trois couches de bois (2.1-2.5) et d'au moins deux couches de prévention incendie (4.1-4.4), dans laquelle chaque couche de bois (2.1-2.5) jouxte au moins une des couches de prévention incendie (4.1-4.4) alors que les au moins trois couches de bois (2.1-2.5) et les au moins deux couches de prévention incendie (4.1-4.4) s'étendent chacune dans des plans (X, Y) qui sont au moins substantiellement perpendiculaires aux plaques de couverture de la porte.

2. Porte selon la revendication 1, **caractérisée en ce que** deux des couches de bois (2.1-2.5) forment une couche externe des éléments de construction.

3. Porte selon l'une quelconque des revendications précédentes, **caractérisée en ce qu'**à l'exception d'une couche de bois externe, sur les deux côtés, chaque couche de bois jouxte une couche de prévention incendie (4.1-4.4).

4. Porte selon l'une quelconque des revendications précédentes, **caractérisée en ce que** sur les deux côtés, chacune des au moins deux couches de prévention incendie (4.1-4.3) jouxte une des couches de bois (2.1-2.5), en particulier **en ce que** chaque couche de prévention incendie jouxte au moins une des couches de bois, encore mieux **en ce que** sur les deux côtés, chaque couche de prévention incendie jouxte une des couches de bois.

5. Porte selon l'une quelconque des revendications précédentes, **caractérisée en ce que** les au moins deux couches de prévention incendie (4.1-4.4) et les au moins trois couches de bois (2.1-2.5) sont au moins substantiellement parallèles les unes aux autres.

6. Porte selon l'une quelconque des revendications précédentes, **caractérisée en ce que** les couches de bois et les couches de prévention incendie (4.1-4.4) sont au moins substantiellement parallèles les unes aux autres.

7. Porte selon l'une quelconque des revendications précédentes, **caractérisée en ce que** chaque couche de prévention incendie (4.1-4.4) se trouve entre deux couches de bois (2.1-2.5).

8. Porte selon l'une quelconque des revendications précédentes, **caractérisée en ce que** les éléments de construction comprennent une poutre ou un panneau en bois, dans laquelle la poutre ou le panneau en bois est muni d'au moins deux rainures espacées (6.1-6.3) alors que dans chaque rainure, une couche de prévention incendie (4.1-4.4) est incluse.

9. Porte selon la revendication 8, **caractérisée en ce que** les rainures (6.1-6.3) sont au moins substantiellement parallèles les unes aux autres.

10. Porte selon la revendication 8 ou 9, **caractérisée en ce que** pour au moins une des rainures (6.1-6.3) il s'applique qu'elle présente une profondeur (h₁) qui est supérieure à cinquante pourcents d'un diamètre de l'élément de construction selon une section transversale à travers la rainure respective.

11. Porte selon la revendication 10, **caractérisée en ce que** pour au moins une des rainures il s'applique qu'elle présente une profondeur (d₁) qui est supérieure à quatre-vingt pourcents d'un diamètre (h₀) de l'élément de construction selon une section transversale à travers la rainure respective.

12. Porte selon la revendication 10 ou 11, **caractérisée en ce que** pour chaque rainure il s'applique qu'elle présente une profondeur (h₁) qui est supérieure à cinquante pourcents et est de préférence supérieure à quatre-vingt pourcents d'un diamètre (h₀) de l'élément de construction dans la direction de la profondeur de la rainure respective.

13. Porte selon l'une quelconque des revendications précédentes, **caractérisée en ce que** le matériau de prévention incendie est un matériau solide qui ne brûle pas à une température qui est inférieure à 1 000°C et de préférence ne brûle pas à une température qui est inférieure à 1 200°C.

14. Porte selon l'une quelconque des revendications précédentes, **caractérisée en ce que** le matériau de prévention incendie se dilate en volume d'un facteur dans l'intervalle de 2-10 sous l'influence d'un feu qui atteint l'élément de construction.

15. Porte selon l'une quelconque des revendications précédentes, **caractérisée en ce que** le matériau de prévention incendie est un matériau qui, dans un état libre, se dilate en volume dudit facteur lorsque la température de ce matériau de prévention incendie s'élève au-dessus d'une température T, dans laquelle T se trouve dans l'intervalle de 100-180°C, encore mieux dans l'intervalle de 110-140°C.

16. Porte selon la revendication 15, **caractérisée en ce que** le matériau de prévention incendie est un matériau qui, dans un état libre, se dilate dudit facteur lorsque la température du matériau de prévention incendie s'élève au-dessus d'une température d'approximativement 120°C.

17. Porte selon l'une quelconque des revendications précédentes, **caractérisée en ce que** le matériau de prévention incendie présente une masse spécifique qui est supérieure à 1 000 kg/m³.

18. Porte selon la revendication 17, **caractérisée en ce que** le matériau de prévention incendie présente une masse spécifique qui est supérieure à 1 200 kg/m³ et de préférence supérieure à 1 300 kg/m³.

19. Porte selon l'une quelconque des revendications précédentes, **caractérisée en ce que** le matériau de prévention incendie est un sel qui, par chauffage, forme une substance semblable au verre.

20. Porte selon l'une quelconque des revendications précédentes, **caractérisée en ce que** le matériau de prévention incendie comprend substantiellement des silicates, tels que des silicates de sodium, silicates de potassium, silicates de sodium potassium, hydrogénosilicates de sodium, hydrogénosilicates de potassium, silicate de magnésium et/ou silicates de calcium.

21. Porte selon l'une quelconque des revendications précédentes, **caractérisée en ce que** le matériau de prévention incendie comprend un verre soluble.

22. Porte selon l'une quelconque des revendications précédentes, **caractérisée en ce que** le matériau de prévention incendie est au moins muni d'un silicate de sodium, par exemple orthosilicate de sodium, métasilicate de sodium, poly(silicate de sodium) et/ou pyrosilicate de sodium.

23. Porte selon l'une quelconque des revendications précédentes, **caractérisée en ce qu'**au moins trois couches de bois (2.1-2.5) sont fabriquées à partir d'un bois non-dur.

24. Porte selon l'une quelconque des revendications précédentes, **caractérisée en ce que** les au moins trois couches de bois (2.1-2.5) présentent chacune une masse spécifique qui est inférieure à 900 kg/m³.

25. Porte selon la revendication 24, **caractérisée en ce que** les au moins trois couches de bois (2.1-2.5) présentent chacune une masse spécifique qui est inférieure à 650 kg/m³.

26. Porte selon l'une quelconque des revendications précédentes, **caractérisée en ce que** les au moins trois couches de bois (2.1-2.5) sont fabriquées à partir de bois de pin, érable et/ou pitchpin.

27. Porte selon l'une quelconque des revendications précédentes, **caractérisée en ce que** pour au moins une couche de prévention incendie (4.1-4.4) et plus spécifiquement pour chaque couche de prévention incendie (4.1-4.4) il s'applique qu'elle s'étend sur une distance à l'intérieur de l'élément de construction qui est supérieure à cinquante pourcents et est de préférence supérieure à quatre-vingt pourcents d'une dimension de l'élément de construction dans la direction de ladite distance.

28. Porte selon l'une quelconque des revendications précédentes, **caractérisée en ce que** le cadre est muni de deux montants verticaux (14-16), d'un élément horizontal supérieur (18) et d'un élément horizontal inférieur (20).

29. Porte selon l'une quelconque des revendications précédentes, **caractérisée en ce qu'**entre les plaques de couverture (32, 34), de la perlite et/ou un remplissage de panneau de fibres minérales (38) est inclus.

30. Porte selon l'une quelconque des revendications précédentes, **caractérisée en ce que** le au moins un montant (14, 16) est muni, sur un côté disposé sur un extérieur de la porte, d'une bande fabriquée à partir d'un matériau transformable en mousse.

31. Porte selon l'une quelconque des revendications précédentes, **caractérisée en ce que** les plaques de couverture (32-34) sont fabriquées à partir de MDF, contre-plaqué, panneau dur, panneau de plâtre et/ou matériaux comparables.

32. Porte selon l'une quelconque des revendications précédentes, **caractérisée en ce que** la porte est de plus munie d'une ouverture en verre.

33. Porte selon l'une quelconque des revendications précédentes, **caractérisée en ce que** dans l'ouverture en verre, du verre Pyrodur est inclus.

34. Porte selon l'une quelconque des revendications précédentes, **caractérisée en ce que** la porte concerne une porte intérieure.

35. Procédé de fabrication d'une porte selon l'une quelconque des revendications 1-34, **caractérisé en ce que** dans une poutre ou un panneau dudit bois, la au moins une rainure (6.1-6.3) est fournie après quoi dans la au moins une rainure, le matériau de prévention incendie est fourni.

36. Procédé selon la revendication 35, **caractérisé en ce que** le matériau de prévention incendie est introduit dans une forme liquide dans la au moins une rainure (6.1-6.3) après quoi le matériau de prévention incendie durcira.

37. Procédé selon la revendication 35, **caractérisé en ce que** le matériau de prévention incendie est introduit dans la au moins une rainure (6.1-6.3) dans la forme d'une bande.

38. Procédé selon la revendication 37, **caractérisé en ce que** la bande est fixée par serrage ou avec de la colle dans la au moins une rainure à la poutre ou au panneau.

39. Procédé pour la fabrication d'une porte selon l'une quelconque des revendications 1-34 précédentes, **caractérisé en ce que** sur les deux côtés de chacune des au moins deux couches de prévention incendie (4.1-4.4) une couche de bois (2.1-2.5) est fixée.

40. Procédé selon la revendication 39, **caractérisé en ce que** les au moins trois couches de bois (2.1-2.5) et les au moins deux couches de prévention incendie (4.1-4.4) sont fixées les unes aux autres par collage.
